# EUROPEAN PATENT SPECIFICATION

(11) **EP 0 776 289 B1**
(45) Date of publication and mention of the grant of the patent: **29.12.1999**
(21) Application number: 95931312.3
(22) Date of filing: 13.09.1995
(51) Int. Cl.: B60T 8/00

(54) **SEQUENTIAL SELECTIVE OPERATION OF AIRCRAFT BRAKES**
SEQUENZIELLE, SELEKTIVE BETÄTIGUNG VON FLUGZEUGBREMSEN
ACTIONNEMENT SELECTIF SEQUENTIEL DE FREINS D'AVIONS

(30) Priority: 14.09.1994 GB 9418476
(43) Date of publication of application: 04.06.1997
(73) Proprietor: Dunlop Aerospace Limited, Coventry, CV6 4AA (GB)
(72) Inventor: WELLS, Trevor, Charles, Leamington Spa Warwickshire CV32 6DL (GB)
(74) Representative: Shaw, Laurence
(86) International application number: GB9502161
(87) International publication number: WO9608396

(56) References cited:
- EP-A- 0 610 115
- US-A- 4 923 056

## Description

The present invention relates to an aircraft braking system for the control of a plurality of brakes and to a method of operating the brakes of a multi-wheel aircraft. It relates in particular, but not exclusively, to a system and a method in which the brakes comprise a plurality of carbon type brakes.

The term carbon brakes is used to mean brakes having friction discs of a carbon-carbon composite material comprising a carbon fibre reinforcing material within a carbon matrix.

The ability to stop an aircraft both quickly and economically is of great importance and enormous amounts of kinetic energy have to be dissipated in order to bring a moving aircraft to rest, particularly in an RTO (refused or rejected take-off) situation. The aircraft velocity may be decreased and the kinetic energy thereby dissipated by drag forces, by application of the engine thrust reversers, and by application of the aircraft wheel brakes. The drag forces can be increased by deploying of airbrakes or speed brakes on the aircraft wings.

However, very high energy brake applications in a RTO situation are fortunately rare events and therefore play little, if any, part in determining overall brake operating economics.

It is now recognised that the rate of wear of carbon brake discs is not proportional to the energy dissipated during the time the brakes are applied, brake wear being disproportionately high when the energy input to the brake is low. Consequently, it is beneficial to apply only a restricted number of the available brakes when the required braking action is relatively low.

The concept of applying only limited numbers of brakes during taxiing operations but all the available brakes in a landing run has already been disclosed in GB 2216209B and US 4986610. The concept has been described variously as brake disabling, selective operation or as taxi-brake select.

In accordance with one of its aspects the present invention provides an aircraft braking system for a multi-wheel aircraft which has a total of N brakes and comprises brake control means for inhibiting any one of a plurality of different numbers of brakes whereby a lesser number n of brakes may be selectively operated, said system comprising transducer means to measure the amount of wearable material remaining in the brakes and said brake control means being responsive to said transducer means whereby when less than the total number N of brakes is required to be operated, the brake control means is operable to select for operation those brakes having the greatest amount of wearable material.

In accordance with another of its aspects the invention provides that operation of an aircraft brake control system is controlled at least in part by an on-board brake control implementation means actuated by a remote land-based signalling means.

The control system may comprise an on-board data bank which stores information concerning the conditions relating to those airports to which the aircraft flies frequently and the selective braking control system may receive input from such a data bank. Thus, in use, before an aircraft lands the minimum proportion of the brakes to be operated may be preset to take account of fixed parameters, e g runway length, airport altitude, and variable parameters such as ambient temperature, runway status (dry/wet/icy).

The invention further provides a method of operating the brakes of a multi-wheel aircraft where the aircraft has a total of N brakes and a lesser number n of brakes may be selectively operated, said method comprising measuring the amount of wearable material remaining in the brakes and selecting for operation those brakes which have the greatest amount of wearable material.

The invention provides also a method of controlling an aircraft braking system comprising a plurality of carbon disc brakes, said method comprising providing brake actuating means for actuating the brakes in response to an applied control signal, providing control means for inhibiting any one of a plurality of different numbers of brakes and arranging the control means to be responsive to the braking level requirement of the aircraft to inhibit a number of brakes selected as a function of said braking level requirement.

A brake control system of the invention may be programmed to determine the minimum number n₁ of brakes that are required to control the aircraft in a safe manner. Selective brake operation may be limited if the anti-skid control system is active (i e dumping pressure to limit the brake actuation pressure) at any aircraft speed. If n₁ brakes operate initially out of a total N brakes fined to the aircraft, then after receipt of an input signal for example denoting anti-skid activity of one or more of said n₁ brakes the number of brakes which are selectively operated may be increased to n₂ where N > n₂ > n₁ provided that the aircraft can continue to operate in a completely safe manner. Similarly, if anti-skid activity then continues to occur in one or more of the n₁ brakes, or is initiated in the additional n₂ - n₁ brakes which are further selectively operated, then the number of selectively operated brakes may be increased to n₃ where N > n₃ > n₂ > n₁. In more general terms, the number of selectively operated brakes may be increased incrementally from n₁ to nₓ where N > nₓ > n₁ and n₁ of the nₓ brakes shall operate without anti-skid activity at any one time.

The system and method of the invention may comprise the feature of application of different brake actuation pressures to different brakes, and as additional brakes are brought into operation the pressures applied to those additional brakes may be selected to increase the temperature of the additional brakes as quickly as practical to the temperature of prior operating brakes.

The brakes may be carbon type brakes.

The invention is described herein in greater detail in relation to embodiments given by way of example only and with reference to the accompanying drawings in which:-
- Figure 1: is a block schematic illustration of an aircraft braking system in accordance with the invention in which, for simplicity, only one of the plurality of wheel and brakes is shown, and
- Figure 2: is a diagrammatic plan view of a typical aircraft landing gear or truck that could be used in accordance with the invention.

Conventionally the wear of a brake assembly is normally monitored by visual inspection of a mechanical indicator, i e a wear pin. By incorporating a transducer to measure the amount of wearable material remaining in the heat pack, those brakes having the smaller amounts of wearable material could be excused from duty, i e they would not be selectively operated. In the case where sets of brakes are selected for use in successive operations, e g four sets of four brakes on an aircraft having 16 main wheels then the set containing the brake with the least wear remaining would not be selected. It would be advantageous to change the make up of the sets at intervals during the brake life in order to minimise the variation between the overall wear of individual brakes.

Furthermore, by summating or otherwise analysing the transducer signals the system may assess the overall wear of the brakes and adjust maximum allowable number of brakes to be disabled at any stage of the flight spectrum in the light of such information.

These selections provide a sophisticated override system which may ensure that a cascade operating system only operates in a manner which is compatible with maintaining the overall safety of the aircraft at all times.

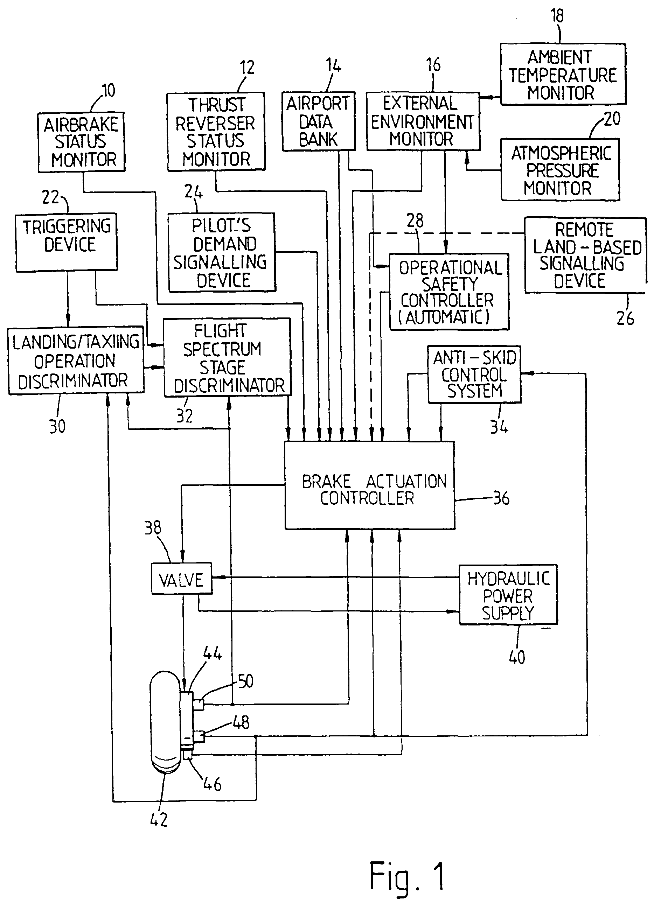

Turning now to the drawings in greater detail, in Figure 1 an aircraft wheel 42 and brake 44 fitted with temperature, wheel speed and brake wear sensors or transducers (50, 48 and 46 respectively) is connected to a hydraulic power supply 40 and the brake pressure is controlled, via the electrohydraulic valve 38, by the brake actuation controller 36. The brake actuation controller determines the number of brakes to be actuated from the plurality of brakes fitted to the aircraft. The controller 36 receives inputs from the airbrake status monitor 10 the thrust reverser status monitor 12, the airport data bank 14, the external environment monitor 16, the pilot's demand signalling device 24 the remote land-based signalling device 26 the operational safety controller 28, the flight spectrum stage discriminator 32, the anti-skid control system 34, the wheel speed transducer 48, the temperature sensor 50 and the wear sensor 46. The wheel speed transducer output is also connected to the anti-skid control system 34 and the landing/taxiing operation discriminator 30. The temperature output sensor 50 is also connected to the landing/taxiing operation discriminator 30 and the flight spectrum stage discriminator 32. The triggering devices output signal 22 is fed to the two discriminators 30,32.

In practice the said functions 10-36 may be incorporated into a single computer.

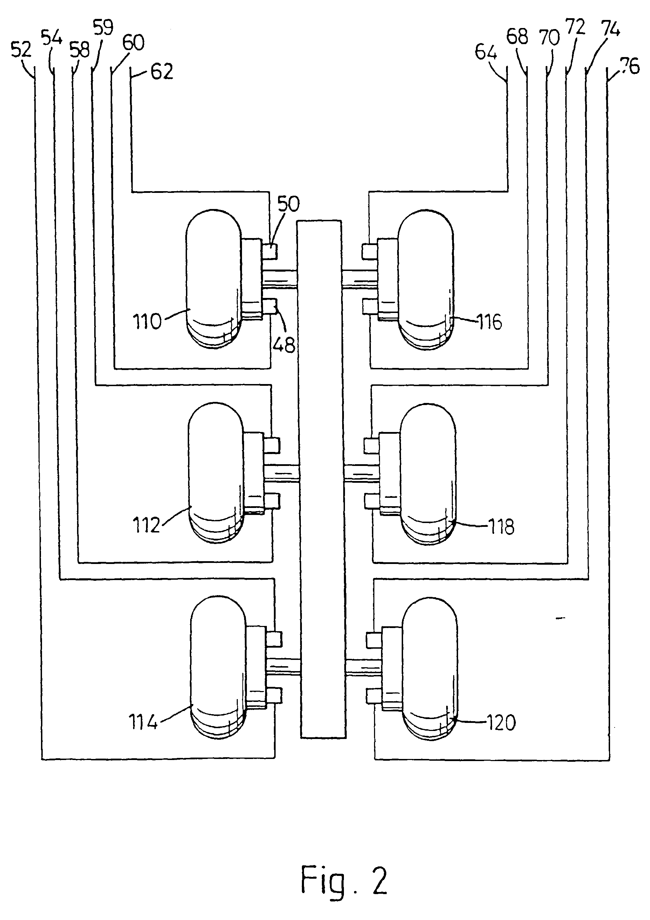

Figure 2 shows a six wheel truck comprising wheels 110, 112, 114, 116, 118 and 120, each of which provide input 52-76 to the brake actuation controller 36 from wheel speed transducers 48 and temperature sensors 50. (N.B. for simplicity transducer 48 and sensor 50 are only identified in relation to wheel 110).

## Claims

1. An aircraft braking system for a multi-wheel aircraft which has a total of N brakes (44) and comprises brake control means (36) for inhibiting any one of a plurality of different numbers of brakes whereby a lesser number n of brakes may be selectively operated, characterised in that said system comprises transducer means (46) to measure the amount of wearable material remaining in the brakes and said brake control means (36) being responsive to said transducer means (46) whereby when less than the total number N of brakes is required to be operated, the brake control means is operable to select for operation those brakes (44) having the greatest amount of wearable material.

2. An aircraft braking system according to claim 1 characterised in that the system comprises a plurality of sets of brakes, the brake control means (36) being operable to select different sets of brakes for use in successive braking operations, and the brake control means being further operable to excuse from duty the set containing a brake with the least amount of wearable material remaining.

3. An aircraft braking system according to claim 2 characterised in that the system is operable to change the allocation of brakes to the sets at intervals during the life of the brakes in order to minimise the variation between the overall wear of individual brakes (44).

4. An aircraft braking system according to any one of the preceding claims characterised in that it comprises means for analysing signals from the transducer means to assess the overall wear of the brakes and adjust the maximum allowable number of brakes to be disabled at any stage of the flight spectrum in response to information from the transducer signals.

5. An aircraft braking system according to any one of the preceding claims characterised in that it comprises a plurality of carbon type brakes (44).

6. An aircraft braking system according to any one of the preceding claims characterised in that the brake control means (36) is operable simultaneously to apply different brake actuation pressures to different brakes.

7. An aircraft braking system according to any one of claims 1 to 6 characterised in that as additional brakes are brought into operation sequentially, different brake actuation pressures are applied to the additional brakes in a manner selected to increase the temperature of the additional brakes as quickly as practical to the temperature of prior operating brakes.

8. Method of operating the brakes of a multi-wheel aircraft where the aircraft has a total of N brakes (44) and a lesser number n of brakes may be selectively operated, characterised in that said method comprises employing means (46) for measuring the amount of wearable material remaining in the brakes (44) and selecting for operation those brakes which have the greatest amount of wearable material.

9. Method according to claim 8 characterised in that it comprises providing transducer means (46) to measure the amount of wearable material remaining in the brakes and arranging brake control means to be responsive to said transducer means whereby when less than the total number N of brakes is required to be operated, the brake control means selects for operation those brakes which have the greatest amount of wearable material.

10. Method according to claim 9 for operating a plurality of sets of brakes, characterised in that brake control means (36) is provided to control operation of the brakes and is arranged to select different sets of brakes for use in successive braking operations, and the brake control means being further operable to excuse from duty the set containing a brake with the least amount of wearable material remaining.

11. Method according to claim 10 characterised in that the brake control means changes the allocation of brakes to each set at intervals during the life of the brakes in order to minimise the variation between the overall wear of individual brakes.

12. Method according to any one of claims 8 to 11 characterised in that it comprises assessing the overall wear of the brakes and adjusting the maximum allowable number of brakes to be disabled at any stage of the flight spectrum in response to said assessment.

13. Method according to any one of claims 8 to 12 characterised in that it is applied to the control of carbon type brakes.

14. Method according to any one of claims 8 to 13 characterised in that means is provided simultaneously to apply different brake actuation pressures to different brakes.

15. Method according to any one of claims 8 to 14 characterised in that as additional brakes (44) are brought into operation sequentially, different brake actuation pressures are applied to the additional brakes in a manner selected to increase the temperature of the additional brakes as quickly as practical to the temperature of prior operating brakes.

## Patentansprüche

1. Flugzeug-Bremssystem für ein mehrrädriges Flugzeug, das insgesamt N-Bremsen (44) aufweist und ein Bremsregelungsmittel (36) zum Außerbetriebsetzen irgendeiner Bremse einer Vielzahl von unterschiedlichen Zahlen von Bremsen umfaßt, wodurch eine kleinere Zahl n von Bremsen selektiv betätigt werden kann, **dadurch gekennzeichnet**, daß das System ein Wandlermittel (46) zum Messen der Größe des in den Bremsen verbleibenden verschleißbaren Materials umfaßt und daß das Bremsregelungsmittel (36) auf das Wandlermittel (46) reagiert, wodurch dann, wenn weniger als die Gesamtzahl N von Bremsen zu betätigen ist, das Bremsregelungsmittel inbetriebnehmbar ist, um für die Betätigung diejenigen Bremsen (44) auszuwählen, die die größte Größe verschleißbaren Materials aufweisen.

2. Flugzeug-Bremssystem nach Anspruch 1, **dadurch gekennzeichnet**, daß das System eine Vielzahl von Sätzen von Bremsen umfaßt, wobei das Bremsregelungsmittel (36) betätigbar ist, um unterschiedliche Sätze von Bremsen zur Verwendung bei aufeinanderfolgenden Bremsbetätigungen auszuwählen und wobei das Bremsregelungsmittel des weiteren betätigbar ist, um den Satz außer Betrieb zu setzen, der eine Bremse mit der kleinsten Größe noch verbleibenden verschleißbaren Materials enthält.

3. Flugzeug-Bremssystem nach Anspruch 2, **dadurch gekennzeichnet**, daß das System inbetriebnehmbar ist, um die Zuordnung von Bremsen zu den Sätzen in Intervallen während der Standzeit der Bremsen zu verändern, um die Veränderung zwischen dem Gesamtverschleiß der einzelnen Bremsen (44) zu minimieren.

4. Flugzeug-Bremssystem nach irgendeinem der vorhergehenden Ansprüche, **dadurch gekennzeichnet**, daß es ein Mittel zum Analysieren von Signalen von dem Wandlermittel umfaßt, um den Gesamtverschleiß der Bremsen abzuschätzen und die maximale zulässige Zahl von Bremsen, die außer Betrieb zu setzen sind, in irgendeinem Zustand des Flugspektrum in Reaktion auf die Information von den Wandlersignalen einzustellen.

5. Flugzeug-Bremssystem nach irgendeinem der vorhergehenden Ansprüche, **dadurch gekennzeichnet**, daß es eine Vielzahl von Kohlenstoff-Bremsen (44) umfaßt.

6. Flugzeug-Bremssystem nach irgendeinem der vorhergehenden Ansprüche, **dadurch gekennzeichne**t, daß das Bremsregelungsmittel (36) zugleich inbetriebnehmbar ist, um unterschiedliche Bremsbetätigungsdrücke an unterschiedlichen Bremsen zur Einwirkung zu bringen.

7. Flugzeug-Bremssystem nach irgendeinem der Ansprüche 1 bis 6, **dadurch gekennzeichnet**, daß, wenn zusätzliche Bremsen sequentiell in Betrieb genommen werden, unterschiedliche Bremsbetätigungsdrücke an den zusätzlichen Bremsen in einer so ausgewählten Weise zur Einwirkung gebracht werden, die Temperatur der zusätzlichen Bremsen so schnell wie praktisch an die Temperatur der zuvor arbeitenden Bremsen zu erhöhen.

8. Verfahren zum Betätigen der Bremsen eines mehrrädrigen Flugzeugs, wobei das Flugzeug insgesamt N Bremsen (44) aufweist und eine kleinere Zahl n von Bremsen selektiv betätigt werden kann, **dadurch gekennzeichnet**, daß das Verfahren ein Anwendungsmittel (46) zum Messen der Größe des in den Bremsen (44) verbleibenden verschleißbaren Materials und zum Auswählen derjenigen Bremsen für die Betätigung umfaßt, die die größte Größe verschleißbaren Materials aufweisen.

9. Verfahren nach Anspruch **8 dadurch gekennzeichnet**, daß es das Vorsehen eines Wandlermittels (46) zum Messen der Größe des in den Bremsen verbleibenden verschleißbaren Materials und das Anordnen eines Bremsregelungsmittels in Reaktion auf das Wandlermittel umfaßt, wodurch dann, wenn weniger als die Gesamtzahl N der Bremsen zu betätigen ist, das Bremsregelungsmittel diejenigen Bremsen für die Betätigung auswählt, die die größte Größe verschleißbaren Materials aufweisen.

10. Verfahren nach Anspruch 9 zur Betätigung einer Vielzahl von Sätzen von Bremsen, **dadurch gekennzeichnet**, daß das Bremsregelungsmittel (36) zur Regelung der Betätigung der Bremsen vorgesehen und angeordnet ist, um unterschiedliche Sätze von Bremsen zur Verwendung in aufeinanderfolgenden Bremsbetätigungen auszuwählen, und wobei das Bremsregelungsmittel des weiteren betätigbar ist, um denjenigen Satz außer Betrieb zu setzen, der eine Bremse mit der kleinsten Größe verbleibenden verschleißbaren Materials enthält.

11. Verfahren nach Anspruch 10, **dadurch gekennzeichnet**, daß das Bremsregelungsmittel die Zuordnung von Bremsen zu jedem Satz in Intervallen während der Standzeit der Bremsen verändert, um die Veränderung zwischen dem Gesamtverschleiß der einzelnen Bremsen zu minimieren.

12. Verfahren nach irgendeinem der Ansprüche 8-11, **dadurch gekennzeichnet**, daß es das Abschätzen des Gesamtverschleißes der Bremsen und das Einstellen der maximalen zulässigen Zahl von Bremsen, die außer Betrieb zu setzen sind, in jedem Zustand des Flugspektrums in, Reaktion auf die Abschätzung umfaßt.

13. Verfahren nach irgendeinem der Ansprüche 8-12, **dadurch gekennzeichnet**, daß es bei der Regelung von Kohlenstoff-Bremsen angewendet wird.

14. Verfahren nach irgendeinem der Ansprüche 8-13, **dadurch gekennzeichnet**, daß das Mittel zugleich vorgesehen ist, unterschiedliche Bremsbetätigungsdrücke an unterschiedlichen Bremsen zur Einwirkung zu bringen.

15. Verfahren nach irgendeinem der Ansprüche 8-14, **dadurch gekennzeichnet**, daß, wenn zusätzliche Bremsen (44) sequentiell in Betrieb genommen werden, unterschiedliche Bremsbetätigungsdrücke an den zusätzlichen Bremsen in einer so ausgewählten Weise zur Einwirkung gebracht werden, die Temperatur der zusätzlichen Bremsen so schnell wie praktisch auf die Temperatur der zuvor arbeitenden Bremsen zu erhöhen.

## Revendications

1. Système de freinage d'avion pour un avion à roues multiples qui a un total de N freins (44) et qui comporte des moyens de commande de freins (36) pour bloquer l'un des freins, parmi des nombres différents de freins, moyennant quoi un nombre inférieur n de freins peut être actionné sélectivement, caractérisé en ce que le système comporte des moyens formant transducteurs (46) pour mesurer la quantité de matériau d'usure qu'il reste dans les freins, les moyens de commande de freins (36) réagissant aux moyens formant transducteurs (46), moyennant quoi lorsqu'il faut actionner un nombre de freins inférieur au nombre total N, les moyens de commande de freins sont aptes à être mis en action pour choisir en vue de l'actionnement les freins (44) qui présentent la plus grande quantité de matériau d'usure.

2. Système de freinage d'avion selon la revendication 1, caractérisé en ce qu'il comporte plusieurs jeux de freins, les moyens de commande de freins (36) étant aptes à être mis en action pour sélectionner différents jeux de freins en vue d'une utilisation lors d'opérations de freinage successives, et les moyens de commande de freins étant également aptes à être mis en action pour exempter de fonctionnement le jeu qui contient un frein dans lequel il reste le moins de matériau d'usure.

3. Système de freinage d'avion selon la revendication 2, caractérisé en ce qu'il est apte à être mis en action pour modifier l'affectation des freins aux jeux par intervalles, pendant la durée de vie des freins, afin de minimaliser la variation de l'usure globale entre les freins individuels (44).

4. Système de freinage d'avion selon l'une quelconque des revendications précédentes, caractérisé en ce qu'il comporte des moyens pour analyser les signaux provenant des moyens formant transducteurs, afin d'évaluer l'usure globale des freins et de régler le nombre maximal autorisé de freins à mettre hors service, à n'importe quel point du spectre de vol, en réponse à une information provenant des signaux du transducteur.

5. Système de freinage d'avion selon l'une quelconque des revendications précédentes, caractérisé en ce qu'il comporte plusieurs freins (44) du type à carbone.

6. Système de freinage d'avion selon l'une quelconque des revendications précédentes, caractérisé en ce que les moyens de commande de freins (36) sont aptes à être mis en action simultanément pour appliquer différentes pressions de freinage à différents freins.

7. Système de freinage d'avion selon l'une quelconque des revendications 1 à 6, caractérisé en ce que lorsque des freins supplémentaires sont mis en service de manière séquentielle, différentes pressions d'actionnement de freins sont appliquées aux freins supplémentaires d'une manière choisie pour augmenter la température des freins supplémentaires aussi rapidement qu'il est pratique pour la température des freins fonctionnant auparavant.

8. Méthode de fonctionnement pour les freins d'un avion à roues multiples, lorsque l'avion a un total de N freins (44) et qu'un nombre inférieur n de freins peut être actionné sélectivement, caractérisée en ce que ladite méthode consiste à utiliser des moyens (46) pour mesurer la quantité de matériau d'usure qu'il reste dans les freins (44), et à sélectionner en vue de l'actionnement les freins qui ont la plus grande quantité de matériau d'usure.

9. Méthode de fonctionnement selon la revendication 8, caractérisée en ce qu'elle consiste à prévoir des moyens formant transducteurs (46) pour mesurer la quantité de matériau d'usure qu'il reste dans les freins, et à faire en sorte que des moyens de commande de freins réagissent aux moyens formant transducteurs, moyennant quoi lorsqu'il faut actionner un nombre de freins inférieur au nombre total N, les moyens de commande de freins sélectionnent en vue de l'actionnement les freins qui ont le plus de matériau d'usure.

10. Méthode selon la revendication 9 pour le fonctionnement de plusieurs jeux de freins, caractérisée en ce que des moyens de commande de freins (36) sont prévus pour commander le fonctionnement des freins, et sont conçus pour sélectionner en vue d'une utilisation différents jeux de freins lors d'opérations de freinage successives, et les moyens de commande de freins sont également aptes à être mis en action pour exempter de fonctionnement le jeu qui contient un frein sur lequel il reste le moins de matériau d'usure.

11. Méthode selon la revendication 10, caractérisée en ce que les moyens de commande de freins modifient l'affectation des freins à chaque jeu par intervalles, pendant la durée de vie des freins, afin de minimaliser la variation d'usure globale entre les freins individuels.

12. Méthode selon l'une quelconque des revendications 8 à 11, caractérisée en ce qu'elle consiste à évaluer l'usure globale des freins et à régler le nombre maximal autorisé de freins à mettre hors service, à n'importe quel point du spectre de vol, en réponse à l'évaluation.

13. Méthode selon l'une quelconque des revendications 8 à 12, caractérisée en ce qu'elle est appliquée pour commander des freins du type à carbone.

14. Méthode selon l'une quelconque des revendications 8 à 13, caractérisée en ce que des moyens sont prévus pour appliquer simultanément différentes pressions d'actionnement de freinage à différents freins.

15. Méthode selon l'une quelconque des revendications 8 à 14, caractérisée en ce que lorsque des freins (44) supplémentaires sont mis en marche de manière séquentielle, différentes pressions d'actionnement de freins sont appliquées aux freins supplémentaires, d'une manière choisie pour augmenter la température des freins supplémentaires aussi rapidement qu'il est pratique pour la température des freins fonctionnant auparavant.
